# EUROPÄISCHE PATENTSCHRIFT

(11) **EP 2 192 971 B1**
(45) Veröffentlichungstag und Bekanntmachung des Hinweises auf die Patenterteilung: **25.06.2014**
(21) Anmeldenummer: 08801963.3
(22) Anmeldetag: 10.09.2008
(51) Int. Cl.: B01D 53/26, B60T 17/00, F15B 21/04

(54) **LUFTFILTERPATRONE FÜR EINE DRUCKLUFTAUFBEREITUNGSANLAGE MIT ENTNEHMBARER TROCKENMITTELBOX**
AIR FILTER CARTRIDGE FOR A COMPRESSED AIR PROCESSING SYSTEM WITH A REMOVABLE DESICCANT BOX
CARTOUCHE DE FILTRE A AIR POUR UN SYSTEME D'ALIMENTATION EN AIR COMPRIME, AVEC BOITE DE SICCATIF AMOVIBLE

(30) Priorität: 27.09.2007 DE 102007046167
(43) Veröffentlichungstag der Anmeldung: 09.06.2010
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Mattusch, Gundula
(86) Internationale Anmeldenummer: PCT/EP2008/007391
(87) Internationale Veröffentlichungsnummer: WO 2009/043428

(56) Entgegenhaltungen:
- EP-A- 0 230 991
- EP-A- 1 048 541
- EP-A- 1 495 934
- DE-A1- 4 339 758
- DE-A1- 19 955 898
- DE-B3-102006 019 865
- DE-U1- 8 518 993

## Beschreibung

Die Erfindung betrifft eine Luftfilterpatrone für eine Druckluftaufbereitungsanlage mit einer Trockenmittelbox mit Trockenmittel und einem die Trockenmittelbox umfassenden Behälter, wobei der Behälter offen ist, so dass die Trockenmittelbox mit Trockenmittel aus dem Behälter entnehmbar ist, ohne den Behälter zu zerstören, und wobei die Trockenmittelbox geschlossen ist, so dass das Trockenmittel nicht aus der Trockenmittelbox austreten kann wobei die Luftfilterpatrone eine Dichtung umfasst, die zwischen der Trockenmittelbox, dem Behälter und einem Lufttrocknergehäuse abdichtend wirkt.

Druckluftaufbereitungsanlagen werden beispielsweise in Nutzfahrzeugen eingesetzt, wo sie von einem Kompressor erzeugte Druckluft von Öl, Schmutz und Feuchtigkeit befreien. Die so aufbereitete Druckluft wird dann in geeigneter Weise auf verschiedene vorhandene Verbraucher verteilt. Die Aufbereitung der Druckluft ist notwendig, da die der Druckluftaufbereitungsanlage nachgeordneten Verbraucher ansonsten korrodieren und verschmutzen und schließlich eine deutlich reduzierte Lebensdauer aufweisen würden.

Die Reinigungsfunktion wird dabei üblicherweise von einer austauschbaren Luftfilterpatrone, beispielsweise einer Filterpatrone mit OSC-Funktionalität ("Oil Separator Cartrige"), wahrgenommen, welche Vorrichtungen zum Abscheiden von Öl und Schmutz sowie dem Trocknen der Luft umfasst. Obwohl moderne Druckluftaufbereitungsanlagen eine Möglichkeit zur zumindest teilweisen Regeneration oder Spülung der Luftfilterpatrone durch Umkehrung der Luftströmung in einem Regenerationszyklus aufweisen, ist die Luftfilterpatrone ein Verschleißteil, welches regelmäßig ausgetauscht werden muss.

Üblicherweise wird versucht, die Lebensdauer der Luftfilterpatrone zu maximieren. Dies kann beispielsweise dadurch geschehen, dass die Luftfilterpatrone größer dimensioniert wird, wodurch sie in der Lage ist, mehr Luft vor ihrem endgültigen Verschleiß zu reinigen. Die Verwendung einer größeren Luftfilterpatrone ist jedoch nicht immer ohne weiteres möglich. Der verfügbare Bauraum, beispielsweise in einem Fahrzeug, ist üblicherweise beschränkt. Besonderes Augenmerk gilt dabei der axialen Baulänge der Luftfilterpatrone.

Weiterhin entsteht durch den vollständigen Austausch der Luftfilterpatrone eine große Menge an Abfall, welcher nur aufwendig einem Recyclingzyklus zugeführt werden kann, da die verschiedenen verwendeten Materialien schlecht trennbar sind.

Aus der DE 199 55 898 A1 ist eine als Trockenmittelbox bezeichnete Luftfilterpatrone mit einem formstabilen Trockenmittelkörper, der gemäß der vorliegenden Erfindung als Trockenmittelbox zu bezeichnen wäre, bekannt, wobei zwei voneinander getrennte Dichtungen zwischen der Trockenmittelbox, dem Behälter und dem Anschlussflansch vorgesehen sind.

Weiterhin sind auch aus der DE 43 39 758 A1, der EP 0 230 991 A2, der DE 85 18 993 U1, der DE 10 2006 019 865 B3, der EP 1 495 934 A2 und der EP 1 048 541 A1 Luftfilterpatronen bekannt, bei denen zwei voneinander separate Dichtungen zur Abdichtung zwischen einem Behälter der Luftfilterpatrone, einer in den Behälter angeordneten Trockenmittelbox und einem Lufttrocknergehäuse vorgesehen.

Der Erfindung liegt die Aufgabe zugrunde, eine Luftfilterpatrone bereitzustellen, die eine möglichst geringe axiale Bauhöhe aufweist.

Diese Aufgabe wird mit den Merkmalen des unabhängigen Anspruches gelöst.

Vorteilhafte Ausführungsformen der Erfindung sind in den abhängigen Ansprüchen gegeben.

Die Erfindung baut auf der gattungsgemäßen Luftfilterpatrone dadurch auf, dass die Luftfilterpatrone eine Dichtung umfasst, die im montierten Zustand zwischen der Trockenmittelbox, dem Behälter und einem Lufttrocknergehäuse dichtet. Die Verwendung einer gemeinsamen Dichtung zwischen Trockenmittelbox, Behälter und Lufttrocknergehäuse ermöglicht eine in axialer Richtung kürzere Bauform, da sonst einzelne Dichtungen vorzusehen wären, die jeweils axialen Bauraum beanspruchen würden. Die zerstörungsfreie Entnehmbarkeit der Trockenmittelbox aus dem Behälter, der ein einfacher Blechtopf sein kann, ermöglicht weiterhin das separate Recycling der Trockenmittelbox mit Trockenmittel, während der Behälter selbst mit einer neuen Trockenmittelbox mit Trockenmittel bestückt werden kann. Der Behälter kann also direkt wieder verwendet werden.

Vorteilhafterweise kann vorgesehen sein, dass die Dichtung eine Lamelle aufweist, die als Rückschlagventil wirkt. Während einer Regenerationsphase, bei der die Strömungsrichtung der Luft umgekehrt wird, öffnet die Lamelle, so dass das in der Luftfilterpatrone angesammelte Öl, der Schmutz und die Feuchtigkeit ausgespült werden.

Nützlicherweise kann vorgesehen sein, dass im Inneren der Trockenmittelbox Luftleitelemente angeordnet sind, die die durchströmende Luft auf einem labyrinthartigen Strömungsweg hält. Um eine ausreichende Trocknung der Druckluft zu erreichen, ist es notwendig, dass der mit Trockenmittel gefüllte Strömungsweg eine Mindestlänge aufweist. Der Strömungsweg der Luft verläuft hauptsächlich axial und verhindert somit eine weitere Reduzierung der Bauhöhe der Luftfilterpatrone. Das Anbringen von Luftleitelementen in der Trockenmittelbox, die ein mäanderförmiges Strömen der Luft ermöglichen, erlaubt eine weitere Reduzierung der Bauhöhe der Luftfilterpatrone bei konstantem Strömungsweg innerhalb der Trockenmittelbox.

Vorteilhafterweise kann vorgesehen sein, dass an der Luftfilterpatrone eine Verdrehsicherung in Form eines Zapfens angeordnet ist. Die Verdrehsicherung dient dabei dem Vorzentrieren der Luftfilterpatrone zur einfacheren Montage und ist weiterhin ein einfacher Schutz für die Dichtung, die so bei der Montage vor Scherspannungen bewahrt werden kann.

Weiterhin kann vorgesehen sein, dass über den Zapfen eine Sicherheitsentlüftungsfunktion realisiert ist, die die Luftfilterpatrone vor einem Ausbau in einen drucklosen Zustand überführt. Wenn ein die Luftfilterpatrone auf dem Lufttrocknergehäuse fixierender Bajonettring gelöst wird, kann ein in der Luftfilterpatrone eventuell noch vorhandener Restdruck die Luftfilterpatrone plötzlich von dem Lufttrocknergehäuse anheben, wobei eine erhebliche Verletzungsgefahr besteht. Dies kann verhindert werden, indem die Luftfilterpatrone vor dem endgültigen Lösen des Bajonettrings durch ein Ventil im Lufttrockner entlüftet wird. Die Ventilfunktion ist dabei im Bereich des Zapfens realisiert.

Nützlicherweise kann vorgesehen sein, dass die Trockenmittelbox direkt an dem Lufttrocknergehäuse angeordnet ist. Das Entfallen von Zwischenstücken, insbesondere einer Bodenplatte des Behälters, zwischen Trockenmittelbox und Lufttrocknergehäuse erlaubt eine in axialer Richtung kurze Bauform.

Vorteilhafterweise kann vorgesehen sein, dass ein der Trockenmittelbox in Strömungsrichtung der zu trocknenden Luft vorgelagerter Vorfilter vorgesehen ist, der Öl- und Schmutzpartikel ausfiltert.

Weiterhin kann vorgesehen sein, dass der Vorfilter in einer Förderphase in axialer Richtung durchströmt wird.

Bei dieser Anordnung kann der Vorfilter unter dem Trockenmittelboxdeckel angeordnet werden.

Alternativ kann vorgesehen sein, dass der Vorfilter in einer Förderphase in radialer Richtung durchströmt wird. Die Durchströmung des Vorfilters in radialer Richtung, vorzugsweise nach außen, erlaubt die Ausnutzung der in axialer Richtung wirkenden Schwerkraft zur Abscheidung von Öl- und Schmutzpartikeln. Weiterhin kann der Filter in herkömmlicher Weise in einer Aussparung zwischen Trockenmittelbox und Behälter gewickelt werden.

Die Erfindung wird nun mit Bezug auf die begleitenden Zeichnungen anhand besonders bevorzugter Ausführungsformen beispielhaft erläutert.

Es zeigen:
- Figur 1: eine schematische Darstellung eines Fahrzeugs mit einer einen Lufttrockner mit Filterpatrone umfassenden Druckluftaufbereitungsanlage;
- Figur 2: eine geschnittene Darstellung einer erfindungsgemäßen Luftfilterpatrone;
- Figur 3: eine geschnittene Darstellung der Verbindung zwischen Luftfilterpatrone und Lufttrockner;
- Figur 4: eine geschnittene Darstellung einer erfindungsgemäßen Luftfilterpatrone mit Bajonettring;
- Figur 5: eine geschnittene Detaildarstellung eines Vorfilters mit Spülkanal;
- Figur 6: eine geschnittene Darstellung einer Luftfilterpatrone mit Zapfen;
- Figur 7: eine Außenansicht einer Trockenmittelbox;
- Figur 8: eine geschnittene Darstellung einer Trockenmittelbox und
- Figur 9: eine Detaildarstellung einer Rastverbindung zwischen einer Trockenmittelbox und einem Behälter.

In den nachfolgenden Zeichnungen bezeichnen gleiche Bezugszeichen gleiche oder gleichartige Teile.

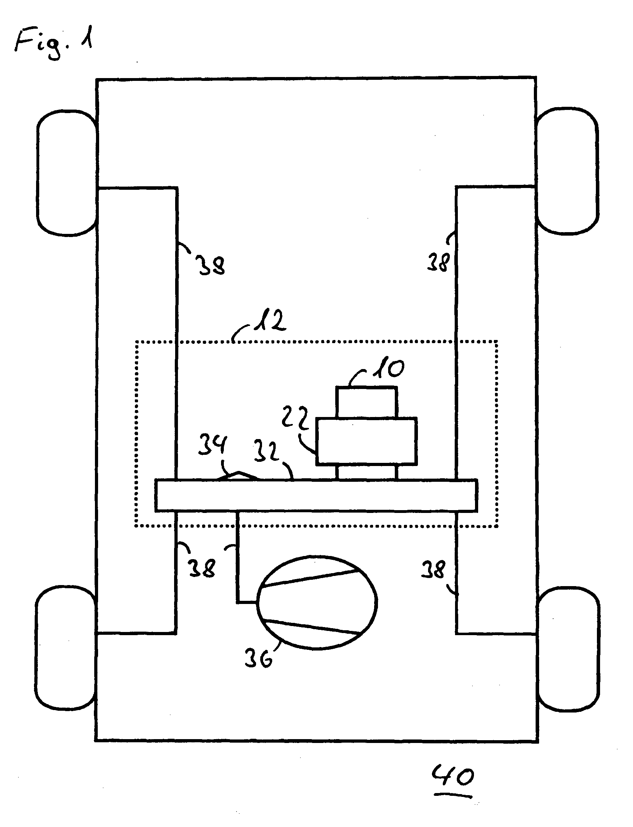

Figur 1 zeigt eine schematische Darstellung eines Fahrzeugs 40 mit einer einen Lufttrockner 22 mit Filterpatrone 10 umfassenden Druckluftaufbereitungsanlage 12. Die Druckluftaufbereitungsanlage 12 erhält komprimierte Luft von einem Kompressor 36 und verteilt die aufbereitete Druckluft über Druckluftleitungen 38 an einzelne Verbraucher. Zu diesem Zweck ist eine verschiedene Ventile umfassende Ventileinrichtung 32 mit einer Entlüftung 34 vorgesehen, die von einem nicht dargestellten Steuergerät angesteuert werden kann. Die Ventileinrichtung 32 kann beispielsweise einen Druckregler und ein Mehrkreisschutzventil umfassen.

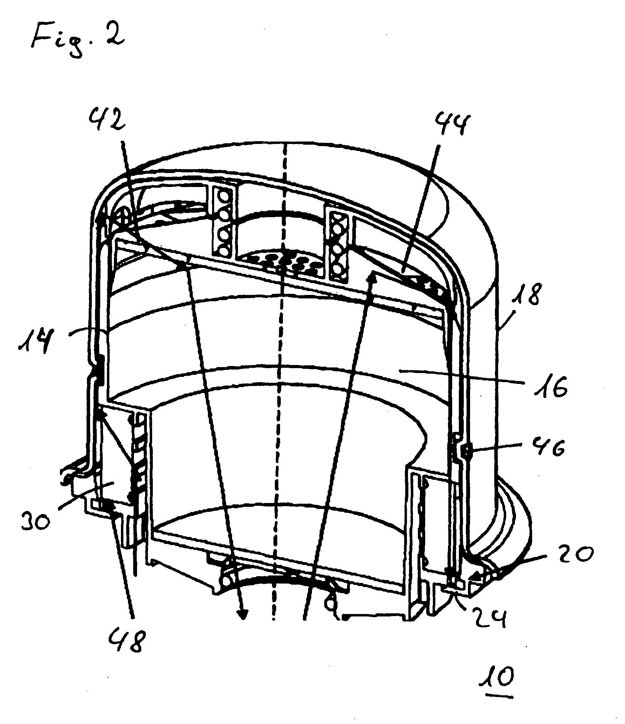

Figur 2 zeigt eine geschnittene Darstellung-einer erfindungsgemäßen Luftfilterpatrone. Die dargestellte Luftfilterpatrone 10 umfasst einen Behälter 18 in den eine Trockenmittelbox 14 mit Trockenmittel 16 eingebracht ist. Weiterhin sind ein Vorfilter 30, eine Dichtung 20, eine Halteschulter 48 für den Vorfilter 30 sowie Luftströmungswege 42, 44 während einer Förder- bzw. Regenerationsphase der Druckluftaufbereitungsanlage eingezeichnet. Der Behälter 18 und die Trockenmittelbox 14 sind über Rastelemente 46 lösbar miteinander verbunden. Eine weitere Fixierung, insbesondere eine Zentrierung, der Trockenmittelbox 14 in dem Behälter 18 wird von der Dichtung 20 übernommen. Der Vorfilter 30 erstreckt sich in axialer Richtung zwischen der Trockenmittelbox 14 und den Behälter 18, wobei er von einer an der Trockenmittelbox 14 angebrachten Halteschulter 48 zusätzlich fixiert wird.

Während einer Förderphase einer Druckluftaufbereitungsanlage strömt die Luft in axialer Richtung in den Zwischenraum zwischen Trockenmittelbox 14 und Vorfilter 30. Die Luft durchquert den Vorfilter 30 in radialer Richtung, wobei Öl- und Schmutzpartikel abgeschieden werden. Die Öl- und Schmutzpartikel sammeln sich aufgrund der Schwerkraft im Bereich der zur Dichtung 20 gehörenden Lamelle 24. Die Luft strömt in axialer Richtung weiter zwischen der Trockenmittelbox 14 und dem Behälter 18 bis sie im oberen Bereich der Luftfilterpatrone auf der ganzen Querschnittsfläche der Trockenmittelbox in diese eintreten kann, in axialer Richtung zurückströmt und die Luftfilterpatrone 10 schließlich wieder verlässt. Der zugehörige Strömungsweg ist mit 42 gekennzeichnet.

Während einer Regenerationsphase der Druckluftaufbereitungsanlage 12 ist die Strömungsrichtung der Luft im Wesentlichen umgekehrt. Die Luft durchströmt den Vorfilter 30 jedoch nicht in radialer Richtung, sondern strömt in axialer Richtung an ihm entlang und entweicht an der als Rückschlagventil fungierenden Lamelle 24 der Dichtung 20, wobei dort abgelagerte Öl- und Schmutzpartikel aus der Luftfilterpatrone ausgeblasen werden. Der zugehörige Strömungsweg ist mit 44 gekennzeichnet.

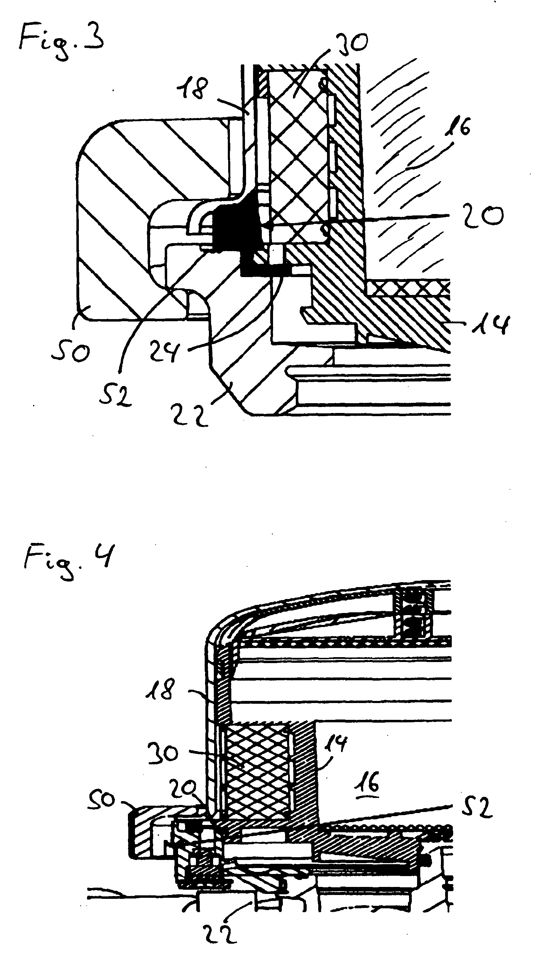

Figuren 3 und 4 zeigen eine geschnittene Darstellung der Verbindung zwischen Luftfilterpatrone und Lufttrockner. Der Behälter 18 einer Luftfilterpatrone wird durch einen Bajonettring 50 auf dem Lufttrocknergehäuse 22 arretiert. Dabei wird eine Nase 52 am Lufttrocknergehäuse 22 verwendet, die ein sicheres Rasten des Bajonettrings 50 zur Fixierung ermöglicht. Die dargestellte Dichtung 20 dichtet zwischen dem Behälter 18, der Trockenmittelbox 14 und dem Lufttrocknergehäuse 22 und stellt gleichzeitig ein während einer Regenerationsphase benötigtes Rückschlagventil in Form einer Lamelle 24 zur Verfügung. Weiterhin kann sie den Vorfilter 30 zusätzlich halten.

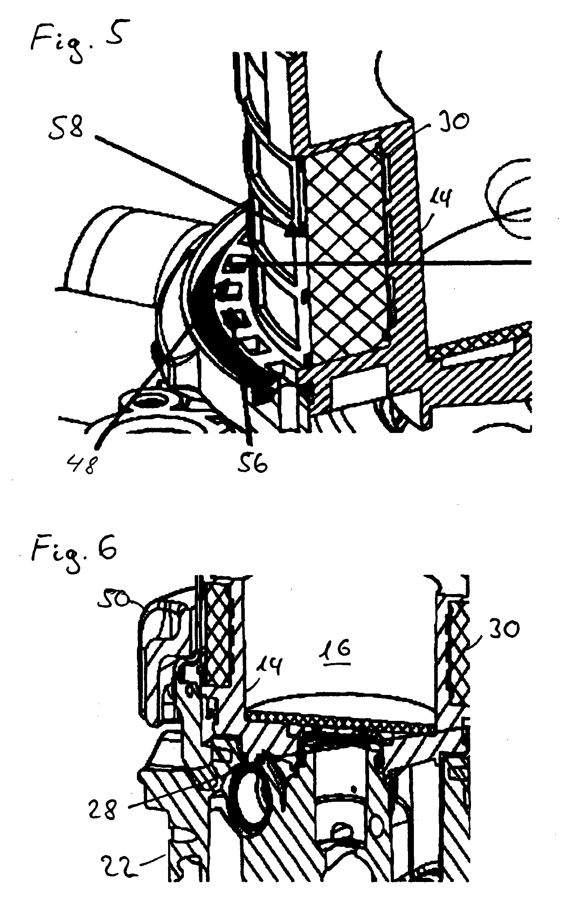

Figur 5 zeigt eine geschnittene Detaildarstellung eines Vorfilters mit Spülkanal. Der Vorfilter 30 wird von einem Strumpf 58 an der Trockenmittelbox 14 fixiert. Radial nach außen ist als Verlängerung der Halteschulter 48 ein durchbrochener Spülkanal 56 angeordnet, in dem sich während einer Förderphase Öl- und Schmutzpartikel abscheiden und ansammeln können. Der Spülkanal 56 wirkt also gleichzeitig als Schmutzablagerungskammer.

Figur 6 zeigt eine geschnittene Darstellung einer Luftfilterpatrone mit Zapfen. Ein Zapfen 28 ist als Fortsatz der Trockenmittelbox 14 direkt mit einer Entlüftungsmöglichkeit des Lufttrocknergehäuses 22 verbunden. Wird der Bajonettring 50 geöffnet, so entweicht eventuell noch in der Filterpatrone vorhandene Druckluft kontrolliert an dem Zapfen 28. Der Zapfen 28 dient gleichzeitig der Vorzentrierung der Luftfilterpatrone und als Verdrehsicherung, die die Dichtung fixt.

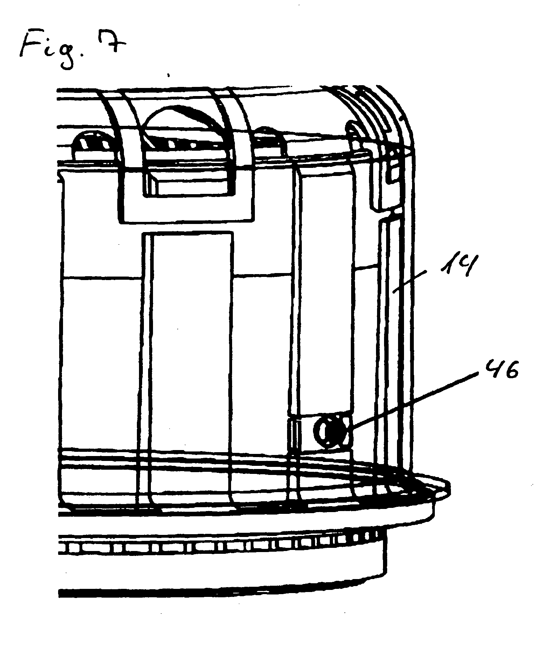

Figur 7 zeigt eine Außenansicht einer Trockenmittelbox. Die dargestellte Trockenmittelbox 14 weist ein Rastelement 46 auf, welches mit dem entsprechenden Gegenstück des Behälters eine lösbare Verbindung eingeht. Weiterhin sind in axialer Richtung verlaufende Vertiefung auf der Oberfläche der Trockenmittelbox 14 zu erkennen, in denen die Luft zwischen der Trockenmittelbox 14 und dem Behälter strömt.

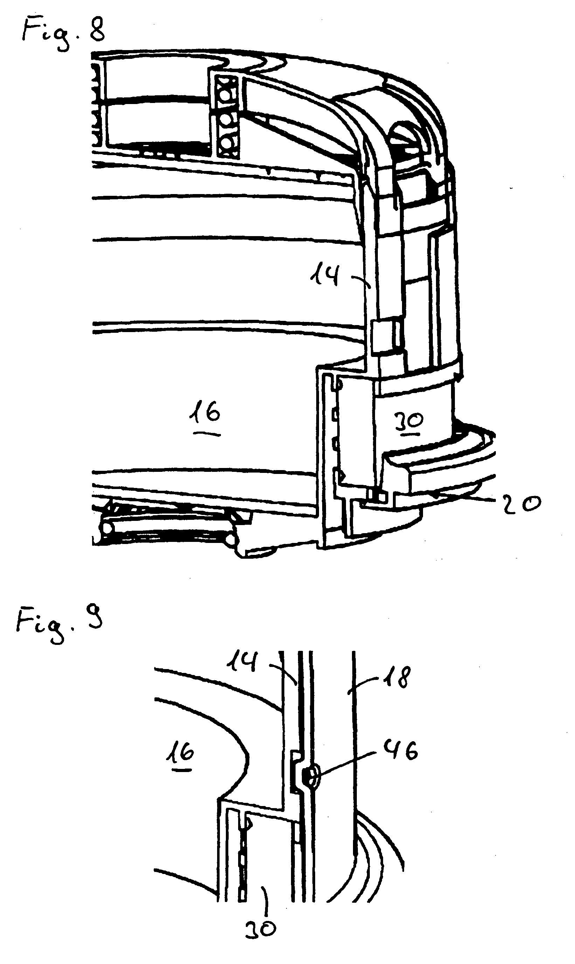

Figur 8 zeigt eine geschnittene Darstellung einer Trockenmittelbox. Die dargestellte Trockenmittelbox 14 mit Trockenmittel 16 ist mit daran befestigter Dichtung 20 und Vorfilter 30 dargestellt. Diese Baugruppe kann als Ganzes ausgetauscht und recycelt werden.

Figur 9 zeigt eine Detaildarstellung einer Rastverbindung zwischen einer Trockenmittelbox und einem Behälter.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Luftfilterpatrone
- 12: Druckluftaufbereitungsanlage
- 14: Trockenmittelbox
- 16: Trockenmittel
- 18: Behälter
- 20: Dichtung
- 22: Lufttrocknergehäuse
- 24: Lamelle
- 28: Zapfen
- 30: Vorfilter
- 32: Ventileinrichtung
- 34: Entlüftung
- 36: Kompressor
- 38: Druckluftleitung
- 40: Fahrzeug
- 42: Luftströmung Förderphase
- 44: Luftströmung Regenerationsphase
- 46: Rastelement
- 48: Halteschulter
- 50: Bajonettring
- 52: Nase
- 56: Spülkanal
- 58: Strumpf

## Patentansprüche

1. Luftfilterpatrone (10) für eine Druckluftaufbereitungsanlage (12) mit einer Trockenmittelbox (14) mit Trockenmittel (16) und einem die Trockenmittelbox (14) umfassenden Behälter (18),
- wobei der Behälter (18) offen ist, so dass die Trockenmittelbox (14) mit Trockenmittel (16) aus dem Behälter (18) entnehmbar ist, ohne den Behälter (18) zu zerstören, und
- wobei die Trockenmittelbox (14) geschlossen ist, so dass das Trockenmittel (16) nicht aus der Trockenmittelbox (14) austreten kann,
**dadurch gekennzeichnet, dass** die Luftfilterpatrone (10) eine Dichtung (20) umfasst, die zwischen der Trockenmittelbox (14), dem Behälter (18) und einem Lufttrocknergehäuse (22) abdichtend wirkt.

2. Luftfilterpatrone (10) nach Anspruch 1, **dadurch gekennzeichnet, dass** die Dichtung (20) eine Lamelle (24) aufweist, die als Rückschlagventil wirkt.

3. Luftfilterpatrone (10) nach Anspruch 1 oder 2, **dadurch gekennzeichnet, dass** im Inneren der Trockenmittelbox (14) Luftleitelemente angeordnet sind, die die durchströmende Luft auf einem labyrinthartigen Strömungsweg hält.

4. Luftfilterpatrone (10) nach einem der vorhergehenden Ansprüche, **dadurch gekennzeichnet, dass** an der Luftfilterpatrone (10) eine Verdrehsicherung in Form eines Zapfens (28) angeordnet ist.

5. Luftfilterpatrone (10) nach Anspruch 4, **dadurch gekennzeichnet, dass** über den Zapfen (28) eine Sicherheitsentlüftungsfunktion realisiert ist, die die Luftfilterpatrone (10) vor einem Ausbau in einen drucklosen Zustand überführt.

6. Luftfilterpatrone (10) nach einem der vorhergehenden Ansprüche, **dadurch gekennzeichnet, dass** die Trockenmittelbox (14) direkt an dem Lufttrocknergehäuse (22) angeordnet ist.

7. Luftfilterpatrone (10) nach einem der vorhergehenden Ansprüche, **dadurch gekennzeichnet, dass** ein der Trockenmittelbox (14) in Strömungsrichtung der zu trocknenden Luft vorgelagerter Vorfilter (30) vorgesehen ist, der Öl- und Schmutzpartikel ausfiltert.

8. Luftfilterpatrone (10) nach Anspruch 7, **dadurch gekennzeichnet, dass** der Vorfilter (30) in einer Förderphase in axialer Richtung durchströmt wird.

9. Luftfilterpatrone (10) nach Anspruch 7, **dadurch gekennzeichnet, dass** der Vorfilter (30) in einer Förderphase in radialer Richtung durchströmt wird.

10. Druckluftaufbereitungsanlage (12) mit einer Luftfilterpatrone (10) nach einem der vorhergehenden Ansprüche.

## Claims

1. Air filter cartridge (10) for a compressed air processing system (12) with a desiccant box (14) with desiccant (16) and a container (18) encompassing the desiccant box (14),
- wherein the container (18) is open so that the desiccant box (14) with desiccant (16) can be removed from the container (18) without destroying the container (18), and
- wherein the desiccant box (14) is closed so that the desiccant (16) cannot leave the desiccant box (14),
**characterised in that** the air filter cartridge (10) comprises a seal (20) which has a sealing effect between the desiccant box (14), the container (18) and an air dryer housing (22).

2. Air filter cartridge (10) according to claim 1, **characterised in that** the seal (20) has a lamella (24) which acts as a non-return valve.

3. Air filter cartridge (10) according to claim 1 or 2, **characterised in that** air guiding elements are arranged inside the desiccant box (14), said air guiding elements maintaining the air flowing through on a labyrinth-like flow path.

4. Air filter cartridge (10) according to one of the preceding claims, **characterised in that** an anti-rotation means in the form of a pin element (28) is arranged on the air filter cartridge (10).

5. Air filter cartridge (10) according to claim 4, **characterised in that** a safety vent function is realised via the pin element (28), said safety vent function conveying the air filter cartridge (10) into a pressure-free state before removal.

6. Air filter cartridge (10) according to one of the preceding claims, **characterised in that** the desiccant box (14) is arranged directly on the air dryer housing (22).

7. Air filter cartridge (10) according to one of the preceding claims, **characterised in that** a pre-filter (30) is provided upstream of the desiccant box (14) in the flow direction of the air to be dried, said pre-filter (30) filtering out oil and dirt particles.

8. Air filter cartridge (10) according to claim 7, **characterised in that** there is a flow in the axial direction through the pre-filter (30) in a conveying phase.

9. Air filter cartridge (10) according to claim 7, **characterised in that** there is a flow in the radial direction through the pre-filter (30) in a conveying phase.

10. Compressed air processing system (12) with an air filter cartridge. (10) according to one of the preceding claims.

## Revendications

1. Cartouche (10) de filtre à air pour un système (12) de préparation d'air comprimé comprenant une boîte (14) d'agent de dessiccation ayant de l'agent (16) de dessiccation et un récipient (18) entourant la boîte (14) d'agent de dessiccation,
- dans laquelle le récipient (18) est ouvert, de sorte que la boîte (14) d'agent de dessiccation ayant de l'agent (16) de dessiccation peut être retirée du récipient (18), sans détruire le récipient (18) et
- dans laquelle la boîte (14) d'agent de dessiccation est fermée, de manière à ce que l'agent (16) de dessiccation ne puisse pas sortir de la boîte (14) d'agent de dessiccation,
**caractérisée en ce que** la cartouche (10) de filtre à air comprend un joint (20), qui agit de manière étanche entre la boîte (14) d'agent de dessiccation, le récipient (18) et une enveloppe (22) de dessiccateur d'air.

2. Cartouche (10) de filtre à air suivant la revendication 1, **caractérisée en ce que** le joint (20) a une lamelle (24), qui agit en tant que clapet anti-retour.

3. Cartouche (10) de filtre à air suivant la revendication 1 ou 2, **caractérisée en ce qu'**à l'intérieur de la boîte (14) d'agent de dessiccation sont disposés des éléments de conduite d'air, qui donnent à l'air passant un trajet d'écoulement de type en labyrinthe.

4. Cartouche (10) de filtre à air suivant l'une des revendications précédentes, **caractérisée en ce qu'**un dispositif d'anti-torsion sous la forme d'un tenon (28) est disposé sur la cartouche (10) de filtre à air.

5. Cartouche (10) de filtre à air suivant la revendication 4, **caractérisée en ce que** par le tenon (28) est réalisée une fonction de sécurité de mise à l'atmosphère, qui met la cartouche (10) de filtre à air, avant un démontage, dans un état sans pression.

6. Cartouche (10) de filtre à air suivant l'une des revendications précédentes, **caractérisée en ce que** la boîte (14) d'agent de dessiccation est disposée directement sur l'enveloppe (22) du dessiccateur d'air.

7. Cartouche (10) de filtre à air suivant l'une des revendications précédentes, **caractérisée en ce qu'**il est prévu un préfiltre (30) monté, en amont dans le sens d'écoulement de l'air à sécher, de la boîte (14) d'agent de dessiccation et séparant par filtration des particules d'huile et de salissure.

8. Cartouche (10) de filtre à air suivant la revendication 7, **caractérisée en ce que** le préfiltre (30) est traversé dans la direction axiale dans une phase d'extraction.

9. Cartouche (10) de filtre à air suivant la revendication 7, **caractérisée en ce que** le préfiltre (30) est traversé dans la direction radiale dans une phase d'extraction.

10. Système (12) de préparation d'air comprimé ayant une cartouche (10) de filtre à air suivant l'une des revendications précédentes.
